# EUROPEAN PATENT SPECIFICATION

(11) **EP 0 731 133 B1**
(45) Date of publication and mention of the grant of the patent: **20.06.2001**
(21) Application number: 96301599.5
(22) Date of filing: 08.03.1996
(51) Int. Cl.: C08K 5/54, C08L 21/00, C08K 3/36

(54) **Rubber composition**
Kautschukmischung
Composition de caoutchouc

(30) Priority: 09.03.1995 JP 4968395
(43) Date of publication of application: 11.09.1996
(73) Proprietor: SUMITOMO CHEMICAL COMPANY LIMITED, Osaka-shi, Osaka 541-0041 (JP)
(72) Inventor: Yamamoto, Keisaku, Ichihara-shi, Chiba (JP); Wakatsuki, Kizuku, Ichihara-shi, Chiba (JP); Saba, Hayato, Funabashi-shi, Chiba (JP)
(74) Representative: Woods, Geoffrey Corlett

(56) References cited:
- EP-A- 0 721 971
- DE-A- 4 308 311
- JP-A- 6 248 116
- US-A- 4 201 698
- US-A- 4 436 847

## Description

The present invention relates to a rubber composition. More precisely the present invention relates to a rubber composition which is excellent in mechanical strength and wear resistance, has a low rolling resistance and is excellent in productivity because of its fast vulcanization velocity.

Rubber compositions containing silica have been widely used for colored or white rubbers on the grounds that they are easily colored as compared with rubber compositions containing carbon black. They have also been used for tires as they have a small loss in energy at room temperature or hotter. Vulcanized rubbers obtained by vulcanizing rubber compositions containing silica, however, are insufficient in mechanical strength such as tear strength, and are inferior in productivity because of their slow vulcanizing velocity.

US-A-4436847 discloses that the abrasion resistance of siliceous filler-reinforced rubber vulcanizates is improved by adding to the unvulcanized rubber composition a silane coupling composition comprising a mixture of a silane coupling agent, such as (a) organic silane compounds containing an internal active olefinic linkage, (b) bis(alkoxysilylalkyl)polysulfides, (c) haloalkylsilanes, and (d) silane compounds containing a vinyl functional group in the organofunctional portion of the compound, and an alkyl alkoxysilane, such as methyltrimethoxysilane.

JP-A-6-248116 discloses a rubber composition for tires containing silica in which the surface of silica was treated with an organic silica compound, for example, at 250°C for an hour. Said composition, however, had a problem that the vulcanized rubber obtained from said rubber composition was still insufficient in wear resistance. Furthermore, it had a problem that productivity of said rubber composition was inferior because a surface-treated silica need to be separately prepared by treating the surface of silica.

As the results of extensive studies for a rubber composition having no such problems, the present inventors have found that rubber compositions containing silica which is not surface-treated and which are obtainable by kneading and controlling the maximum temperature during the kneading at 200°C or less are excellent in wear resistance, have a lower rolling resistance and are excellent in productivity because of its fast vulcanization velocity, and thus have completed the present invention.

Accordingly, the present invention relates to a rubber composition obtainable by kneading a mixture comprising 100 parts by weight of component (A), from 5 to 100 parts by weight of component (B), from 1 to 15 parts by weight of component (C) and from 1 to 20 parts by weight of component (D) and controlling the temperature during the kneading so that the maximum temperature is 200°C or less, wherein
component (A) is a solution polymerized diene rubber,
component (B) is silica,
component (C) is a silane coupling agent which is at least one compound of formula (1) or formula (2):

   [(OR)₃SiCₐH₂ₐ]₂S_{b} (1)

   (OR)₃SiCₐH₂ₐ Z (2)

   wherein R represents a methyl group or an ethyl group, a represents an integer of 1 to 8, b represents an integer of 1 to 6 and Z represents a mercapto group, an epoxy group, a vinyl group or an amino group which is optionally substituted by one or two methyl or ethyl groups, and
component (D) is an organic silicon compound of formula (3): 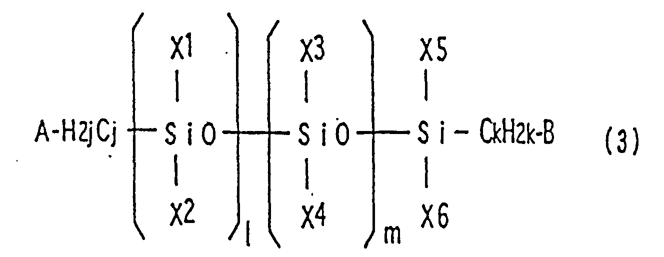 wherein A and B represent independently a hydrogen atom, a hydroxyl group or a vinyl group, 1 and m represent independently an integer of 1 to 100, j and k represent independently an integer of 0 to 50 and X₁ to X₆ represent independently a phenyl group, a vinyl group or a group represented by the following formula (4):

   -CₙH₂ₙY (4)

   wherein Y represents a hydrogen atom or a hydroxyl group and n represents an integer of 0 to 50, having a number average molecular weight of about 100 to 10,000.

The present invention is described in more detail below.

The component (A) in the present invention is a solution polymerized diene rubber. Specific examples of the solution polymerized diene rubber include a solution polymerized butadiene rubber (BR), a solution polymerized styrene-butadiene rubber (SBR), solution polymerized isoprene rubber (IR) and the like. From the viewpoint of tire use, a solution polymerized butadiene rubber and a solution polymerized styrene-butadiene rubber are preferred. In the present invention, the precise chemical structure of the solution polymerized diene rubber is not particularly limited.

The mooney viscosity (ML₁₊₄ 125°C) of the solution polymerized diene rubber is preferably 40-140, more preferably 50-120 in view of kneading processability.

Furthermore, solution polymerized diene rubbers manufactured by adding coupling agents such as SiCl₄, SnCl₄ and the like which therefore contain branched components partially or wholly are preferred in view of kneading processability. These rubbers may be used independently or in combination thereof.

The component (B) in the present invention is silica. There are various kinds of silica which differ in properties such as concentration of surface hydroxyl groups, pH and particle properties. While silica used in the present invention is not limited, preferably the silica has a DBA(dibutylamine) absorption of 100-400 mmol/kg. Typically it has a pH of 5-12. Typically it has a BET specific surface area of 50-300 m²/g.

The amount of the component (B) in the rubber composition of the present invention is 5 - 100 parts by weight, preferably 30 - 90 parts by weight per 100 parts by weight of the component (A). If the amount of the component (B) is too small, the mechanical strength of the vulcanized rubber is lowered. When the amount of the component -(B) is too much, the kneading processability and mechanical strength of the vulcanized rubber are lowered.

The component (C) in the present invention is a silane coupling agent which is at least one compound of formula (1) or formula (2) shown below. These compounds may be used independently or in combination thereof.

[(OR)₃SiCₐH₂ₐ]₂S_{b} (1)

(OR)₃SiCₐH₂ₐZ (2)

In the above formulae, R represents a methyl group or an ethyl group. An ethyl group is preferred. a represents an integer of 1 - 8 and preferably an integer of 2 - 5. b represents an integer of 1-6, preferably an integer of 2-5.

Z represents a mercapto group, an epoxy group (-CHOCH₂), a vinyl group or an amino group optionally substituted by one or two methyl or ethyl groups. When Z is an amino group it is preferably dimethyamino.

Examples of the compounds represented by the formula (1) include bis(trimethoxysilylmethyl) disulfide, bis(2-tri-methoxysilylethyl) disulfide, bis(2-trimethoxysilylethyl) tetrasulfide, bis(2-trimethoxysilylethyl) pentasulfide, bis(2-trimethoxysilylethyl) hexasulfide, bis(3-trimethoxysilylpropyl) disulfide, bis(3-trimethoxysilylpropyl) trisulfide, bis(3-trimethoxysilylpropyl) tetrasulfide, bis(3-trimethoxysilylpropyl) pentasulfide, bis(3-trimethoxysilylpropyl) hexasulfide, bis(4-trimethoxysilylbutyl) tetrasulfide, and compounds in which the methoxy group in the above listed compounds is replaced by an ethoxy group and the like.

Examples of the compounds represented by the formula (2) include 1-mercapto-2-trimethoxysilylethane, 1-mercapto-3-trimethoxy-silylpropane, 1-mercapto-4-trimethoxysilylbutane, 1,2-epoxy-3-trimethoxysilylpropane, 1,2-epoxy-4-trimethoxysilylbutane, 3-trimethoxysilyl-1-propene, 4-trimethoxysilyl-1-butene, 1-dimethylamino-2-trimethoxysilylethane, 1-dimethylamino-3-trimethoxysilylpropane, 1-dimethylamino-4-trimethoxysilylbutane, and compounds in which the methoxy group in the above listed compounds is replaced by an ethoxy group.

Among the compounds represented by the formula (1) and (2), bis(3-triethoxysilylpropyl) trisulfide, bis(3-tri-ethoxysilylpropyl) tetrasulfide, bis(3-triethoxysilylpropyl) pentasulfide are preferred.

The amount of the component (C) in the rubber composition of the present invention is 1 - 15 parts by weight, preferably 2 - 10 parts by weight per 100 parts by weight of the component (A). If the amount of the component (C) is too small, the vulcanization velocity and the mechanical strength of the vulcanized rubber are lowered. When the amount is too much, the mechanical strength is lowered and the production cost is increased. When two or more of the compounds are used as the component (C), the amount of component (C) is considered to be the total amount of all kinds of the compounds used as the component (C).

The component (D) in the present invention is an organic silicon compound of formula (3): 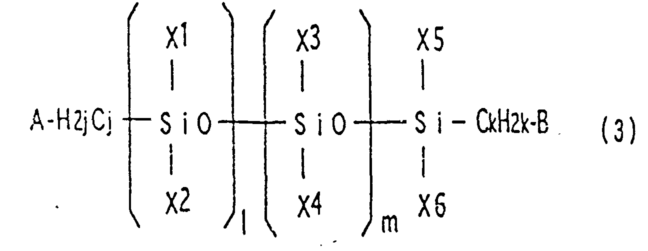 having a number average molecular weight of about 100-10,000.

Specific examples of the component (D) include organic silicon compounds containing one or more hydroxyl groups and straight chain dimethyl polydimethylsiloxanes both ends of which are methylated.

In the formula (3), A and B represent independently a hydrogen atom, a hydroxyl group or a vinyl group. From the viewpoint of improving vulcanization velocity and mechanical strength of the vulcanized rubber, it is preferred that both A and B are hydroxyl groups. l and m represent independently an integer of 1 - 100. From the view point of improving vulcanization velocity, mechanical strength of the vulcanized rubber and kneading processability, l and/or m are preferably an integer of 1-50, more preferably an integer of 2-10. j and k represent independently an integer of 0-50. From the viewpoint of improving vulcanization velocity, mechanical strength of the vulcanized rubber and kneading processability, j and/or k are preferably 0-20 and more preferably 0. X₁-X₆ represent independently a phenyl group, a vinyl group or a group represented by the following formula (4) :

-CₙH₂ₙY (4)

In the formula (4), Y represents a hydrogen atom or a hydroxyl group and n represents an integer of 0 - 50. From the view point of improving vulcanization velocity, mechanical strength of the vulcanized rubber and kneading processability, n is preferably an integer of 0 - 20 and more preferably 0 or 1. X₁-X₆ are preferably the same or different and represent a phenyl group, a vinyl group, a methyl group or a hydroxy group.

Examples of the compound represented by the formula (3) include compounds of the following formula:

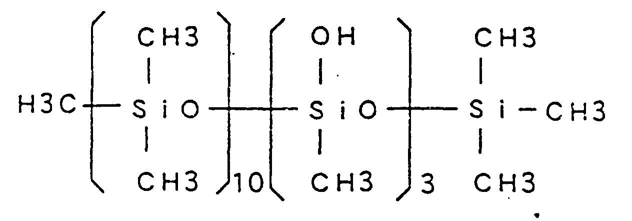

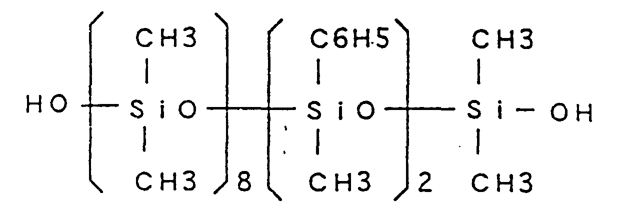

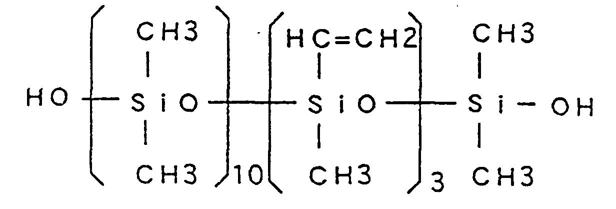

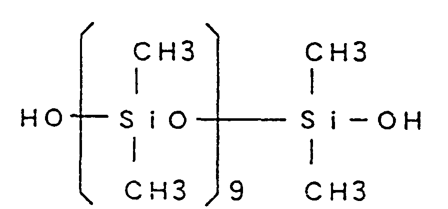

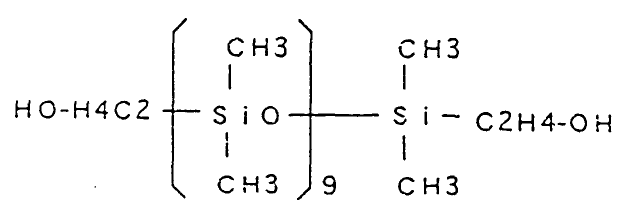

Specific examples of the above-mentioned straight chain dimethyl polydimethylsiloxane both ends of which are methylated include a compound of the following formula (5).

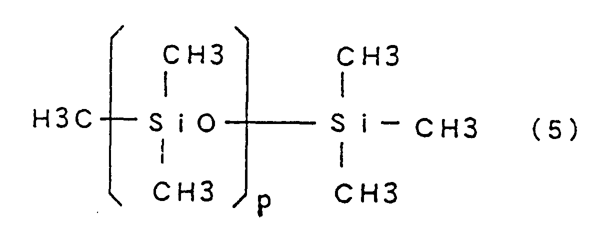

In the formula (5), p represents an integer of 2 - 200. From the view point of improving vulcanization velocity and mechanical strength of the vulcanized rubber and kneading processability, p is preferably an integer of 2 - 100 and more preferably an integer of 4 - 50.

In the present invention, the component (D) may be a single compound or a mixture of compounds. From the viewpoint of decreasing rolling resistance and increasing vulcanization velocity, the compounds of formula (3) are used.

The amount of the component (D) in the rubber composition of the present invention is 1 - 20 parts by weight, preferably 2 - 10 parts by weight per 100 parts by weight of the component (A). If the amount of the component (D) is too small, the effects of increasing the vulcanization velocity and the mechanical strength of the vulcanized rubber and decreasing rolling resistance are lowered. When the amount is too much, the mechanical strength is lowered. When two or more of the compounds are used as the component (D), the amount of component (D) is considered to be the total amount of all kinds of the compounds used as the component (D).

The rubber composition of the present invention can be obtained by kneading predetermined amounts of the components (A) - (D) as described above and controlling the temperature during the kneading so that the maximum temperature is 200°C. Components (C) and (D) are essential. When either component (C) or component (D) is not used, properties such as vulcanization velocity, kneading processability, mechanical strength of vulcanized rubber and rolling resistance are remarkably deteriorated.

The kneading may be performed by using a conventional kneading machine such as rolls or a Banbury mixer until the components are uniformly mixed. The maximum temperature during kneading must be 200°C. The temperature is typically 80°C or more, preferably 100-160°C. If the temperature is too low, the mechanical strength of the vulcanized rubber is lowered. When the temperature is too high, deterioration of the rubber occurs. In kneading, a commonly used rubber such as a natural rubber, an emulsion polymerized butadiene rubber or an emulsion polymerized styrene-butadiene rubber, carbon black, an antioxidant, a vulcanizing agent such as sulfur or organic peroxide, a vulcanizing accelerator, a processing aid, stearic acid, a reinforcing material, a filler, a plasticizer, and a softening agent may be added in addition to the components (A) - (D) which are essential to the present invention.

According to the present invention, it is possible to provide a rubber composition which is excellent in mechanical strength and wear resistance, has a lower rolling resistance and is excellent in productivity because of its fast vulcanization velocity.

The rubber composition of the present invention can be used for various parts of automobiles, various parts of industrial materials, materials for architecture and so on. The rubber composition of the present invention is used most suitably for tires because of its excellent mechanical strength and wear resistance and having a low rolling resistance.

### EXAMPLES

The present invention will now be illustrated in further detail by means of Examples which, however, should not be construed as a limitation upon the scope of the invention.

### Examples 1 - 9 and Comparative Examples 1 - 6

Into a 1,500 ml Banbury mixer adjusted to 110°C were concurrently charged the ingredients shown in Table 1, 50 parts by weight of X-140 (manufactured by Kyodo Sekiyu, an oil) and 6.4 parts by weight of Diablack N339 (manufactured by Mitsubishi Chemicals, HAF carbon black), which were kneaded at a revolution number of rollers of 150 rpm for 5 minutes. The maximum temperature during the kneading is shown in Tables 1 - 4. After adding 1.5 part by weight of Sunknock N (manufactured by Outi Shinko Kagaku, an age resistor), 1.5 part by weight of Antigen 3C (manufactured by Sumitomo Chemical Co., Ltd., an age resistor), 2 parts by weight of zinc oxide and 2 parts by weight of stearic acid as the common combination, the kneading was continued using a 20.3 cm (8 inch) open roll adjusted to 85°C. Then, 1 part by weight of Sox CZ (manufactured by Sumitomo Chemical Co., Ltd., a vulcanizing accelerator), 1 part by weight of Sox D (manufactured by Sumitomo Chemical Co., Ltd., a vulcanizing accelerator) and 1.4 part by weight of sulfur were added and the kneading was further continued to give a compound. Said compound was subjected to press vulcanization at 160°C for 20 minutes to give a vulcanized rubber, which was evaluated by the methods described below. The results are shown in Table 1.

### Comparative Example 7

The procedure in Example 1 was substantially repeated except that component (B) and component (D) are premixed under the condition of 250°C for an hour. The results are shown in Table 3.

### Comparative Example 8

The procedure in Example 1 was substantially repeated except that a Banbury mixer was adjusted to 140°C, the maximum temperature was controlled at 210°C during kneading and the kneading was conducted for 10 minutes.

Only a gelled product was formed and evaluation was impossible.

### Method of Evaluation:

(1) Tear strength, Rubber elasticity (300 % modulus) and Vulcanization velocity:
   These were measured according to JIS (Japanese Industrial Standard)-K-6252. In the measurement of the tear strength, an angle type sample with no cutting was used.
(2) Wear resistance (Loss on wearing)
   The measurement was conducted according to JIS-K-6264 using an Akron wear resistance tester.
(3) Rolling resistance (tan δ) index
   The measurement of rolling resistance (tan δ) index is performed according to JIS K 6394 except using testing plate of 50 mm(L) x 5 mm(W) x 2 mm(D).

A tan δ temperature dispersion curve was obtained by plotting values measured under the conditions of a frequency of 10 Hz, an initial strain of 10 %, a vibration amplitude of ±0.25 % and a rise in temperature of 2 °C/min by Leograph Solid L1R (manufactured by Toyo Seiki and a tan δ at 60°C was obtained from this curve. The values of tan δ in Examples and Comparative Examples using A1 as the component (A) are expressed by indices taking the value in Example 1 as 100, and the values of tan δ in Examples and Comparative Examples using A2 as the component (A) are expressed by indices taking the value in Example 3 as 100. Smaller index means that the rolling resistance is smaller.

In general, in the compositions of the invention:-

Tear strength is preferably 49 kN/m (50 kgf/cm) or more.

Rubber elasticity (300 % modulus) is preferably 11.6 MPa (118 kgf/cm²) or more.

Loss on wearing is preferably 450 mg/1000 cycle or less.

Rolling resistance (tan δ) index is preferably 111 or less in using SBR(A1) as component (A) and is preferably 102 or less in using SBR(A2) as component (A) because the standard is different as described at page 15-16.

Vulcanization velocity is preferably 32 or less.

**Table 1**

| | Example | Comparative Example | | |
|---|---|---|---|---|
| | 1 | 1 | 2 | 3 |
| Composition | | | | |
| (A) | | | | |
| Kind*1 | A1 | A1 | A1 | A1 |
| Amount(wt) | 100 | 100 | 100 | 100 |
| | | | | |
| (B)*2 | | | | |
| Amount(wt) | 78.5 | 78.5 | 78.5 | 78.5 |
| | | | | |
| (C)*3 | | | | |
| Amount(wt) | 6.4 | 6.4 | 0 | 0 |
| | | | | |
| (D) | | | | |
| Kind*4 | D1 | - | D1 | - |
| Amount (wt) | 5 | 0 | 5 | 0 |
| | | | | |
| Maximum Temperature during Kneading(°C) | 152 | 151 | 153 | 153 |
| | | | | |

| Evaluation | | | | |
|---|---|---|---|---|
| Tear Strength kN/m (kgf/cm) | 56(57) | 53(54) | 45(46) | 52(53) |
| 300% Modulus MPa (kgf/cm²) | 12.2(124) | 11.9(121) | 3.9(40) | 4.8(49) |
| Loss on Wearing mg/1000 cycle | 370 | 372 | 996 | 564 |
| Tan δ(60°C) Index | 100 | 91 | 146 | 111 |
| Vulcanization Velocity t₉₀min | 16 | 36 | 30 | 35 |

**Table 2**

| | Example | | | |
|---|---|---|---|---|
| | 2 | 3 | 4 | 5 |
| Composition | | | | |
| (A) | | | | |
| Kind*1 | A2 | A2 | A2 | A2 |
| Amount(wt) | 100 | 100 | 100 | 100 |
| | | | | |
| (B)^{*}2 | | | | |
| Amount(wt) | 78.5 | 78.5 | 78.5 | 78.5 |
| | | | | |
| (C)^{*}3 | | | | |
| Amount(wt) | 6.4 | 6.4 | 6.4 | 6.4 |
| | | | | |
| (D) | | | | |
| Kind*4 | D1 | D1 | D1 | D1 |
| Amount(wt) | 7 | 5 | 3 | 1 |
| | | | | |
| Maximum Temperature during Kneading(°C) | 148 | 151 | 150 | 152 |
| | | | | |

| Evaluation | | | | |
|---|---|---|---|---|
| Tear Strength kN/m (kgf/cm) | 51(52) | 52(53) | 53(54) | 54(55) |
| 300% Modulus MPa (kgf/cm²) | 13.6(139) | 14.0(143) | 14.5(148) | 12.2(124) |
| Loss on Wearing mg/1000 cycle | 335 | 384 | 347 | 395 |
| Tan δ (60°C) Index | 94 | 100 | 102 | 101 |
| Vulcanization Velocity t₉₀min | 18 | 20 | 27 | 27 |

**Table 3**

| | Comparative Example | | | |
|---|---|---|---|---|
| | 4 | 5 | 6 | 7 |
| Composition | | | | |
| (A) | | | | |
| Kind*1 | A2 | A2 | A2 | A2 |
| Amount(wt) | 100 | 100 | 100 | 100 |
| | | | | |
| (B)*2 | | | | |
| Amount(wt) | 78.5 | 78.5 | 78.5 | 78.5*5 |
| | | | | |
| (C)*3 | | | | |
| Amount(wt) | 6.4 | 0 | 0 | 6.4 |
| | | | | |
| (D) | | | | |
| Kind*4 | - | D1 | - | D2*5 |
| Amount(wt) | 0 | 5 | 0 | 10 |
| | | | | |
| Maximum Temperature during Kneading(°C) | 151 | 149 | 153 | 141 |

| Evaluation | | | | |
|---|---|---|---|---|
| Tear Strength kN/m (kgf/cm) | 50(51) | 34(35) | 41(42) | 46 (47) |
| 300% Modulus MPa (kgf/cm²) | 11.3 (115) | 3.2 (33) | 6.2(63) | 12.7 (129) |
| Loss on Wearing mg/1000 cycle | 357 | 518 | 558 | 554 |
| Tan δ (60°C) Index | 107 | 144 | 99 | 95 |
| Vulcanization Velocity t₉₀min | 34 | 36 | 41 | 27 |

**Table 4**

| | Example | | | |
|---|---|---|---|---|
| | 6 | 7 | 8 | 9 |
| Composition | | | | |
| (A) | | | | |
| Kind*1 | A1 | A1 | A1 | A1 |
| Amount(wt) | 100 | 100 | 100 | 100 |
| | | | | |
| (B)*2 | | | | |
| Amount(wt) | 78.5 | 78.5 | 78.5 | 78.5 |
| | | | | |
| (C)*3 | | | | |
| Amount(wt) | 6.4 | 6.4 | 6.4 | 6.4 |
| | | | | |
| (D) | | | | |
| Kind*4 | D2 | D2 | D3 | D3 |
| Amount(wt) | 3 | 1 | 3 | 1 |
| | | | | |
| Maximum Temperature during Kneading(°C) | 151 | 152 | 152 | 151 |

| Evaluation | | | | |
|---|---|---|---|---|
| Tear Strength kN/m (kgf/cm) | 53(54) | 53(54) | 51(52) | 54(55) |
| 300% Modulus MPa (kgf/cm²) | 11.6(118) | 12.2(124) | 11.7(119) | 12.7(129) |
| Loss on Wearing mg/1000 cycle | 404 | 372 | 435 | 407 |
| Tan δ (60°C) Index | 109 | 107 | 108 | 111 |
| Vulcanization Velocity t₉₀min | 31 | 32 | 29 | 30 |

| | | | | |
|---|---|---|---|---|
| *1 A1: a solution polymerized SBR (styrene unit/vinyl unit: 15/45 (Wt %/%) manufactured by adding SiCl₄ as a coupling agent (ML₁₊₄ 125°C=87)) A2: a solution polymerized SBR (styrene unit/vinyl unit: 29/49 (Wt %/%) manufactured by adding SiCl₄ as a coupling agent (ML₁₊₄ 125°C=91)) | | | | |
| *2 (B): silica (SiO₂) (Ulterasil VN3G, manufactured by United silica) | | | | |
| *3 (C): A compound of the formula (1) as defined above wherein R is ethyl, a is 3 and b is 4 | | | | |
| *4 D1: A compound (molecular weight: 611) of the formula (3) as defined above wherein A and B are hydroxyl groups, j, k and m are 0, 1 is 7 and x₁, x₂, x₅ and x₆ are methyl groups. D2: A compound (molecular weight: 533) of the formula (5) as defined above wherein p is 6 (manufactured by Shinetsu Kagaku Kogyo, KF96L-5). D3: A compound (molecular weight: 2610) of the formula (5) as defined above wherein p is 34 (manufactured by Shinetsu Kagaku Kogyo, KF96L-50). *5 compound (B) and compound (D) are premixed at 250°C for an hour. | | | | |

## Claims

1. A rubber composition obtainable by kneading a mixture comprising 100 parts by weight of component (A), from 5 to 100 parts by weight of component (B), from 1 to 15 parts by weight of component (C) and from 1 to 20 parts by weight of component (D) and controlling the temperature during the kneading so that the maximum temperature is 200°C or less, wherein
component (A) is a solution polymerized diene rubber,
component (B) is silica,
component (C) is a silane coupling agent which is at least one compound of formula (1) or formula (2):
[(OR)₃SiCₐH₂ₐ]₂S_{b} (1)
(OR)₃SiCₐH₂ₐZ (2)
wherein R represents a methyl group or an ethyl group, a represents an integer of 1 to 8, b represents an integer of 1 to 6 and Z represents a mercapto group, an epoxy group, a vinyl group or an amino group which is optionally substituted by one or two methyl or ethyl groups, and
component (D) is an organic silicon compound of formula (3): 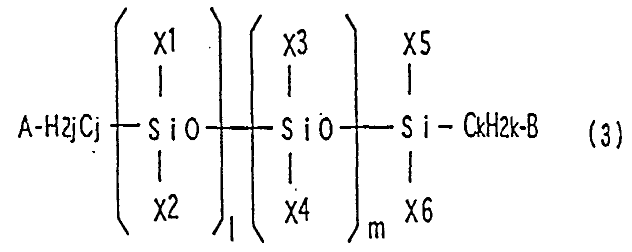 wherein A and B represent independently a hydrogen atom, a hydroxyl group or a vinyl group, l and m represent independently an integer of 1 to 100, j and k represent independently an integer of 0 to 50 and X₁ to X₆ represent independently a phenyl group, a vinyl group or a group represented by the following formula (4):
-CₙH₂ₙY (4)
wherein Y represents a hydrogen atom or a hydroxyl group and n represents an integer of 0 to 50, having a number average molecular weight of about 100 to 10,000.

2. The rubber composition according to claim 1 wherein component (A) is a butadiene rubber or a styrene-butadiene rubber.

3. The rubber composition according to claim 1 or 2, wherein component (D) contains one or more hydroxyl groups.

4. The rubber composition according to any one of the preceding claims, wherein the maximum temperature during the kneading is from 100 to 160°C.

5. A process for producing a rubber composition which comprises kneading a mixture comprising 100 parts by weight of component (A), from 5 to 100 parts by weight of component (B), from 1 to 15 parts by weight of component (C) and from 1 to 20 parts by weight of component (D) and controlling the temperature during the kneading so that the maximum temperature is 200°C or less, wherein components (A), (B), (C) and (D) are as defined in claim 1.

6. The process according to claim 5 wherein the maximum temperature during the kneading is 100 to 160°C.

7. A composition according to any one of claims 1 to 4 in shaped form.

8. A tyre comprising a composition according to any one of claims 1 to 4.

## Patentansprüche

1. Kautschukmasse, erhältlich durch Kneten eines Gemisches, das 100 Gew.-Teile Bestandteil (A), 5 bis 100 Gew.-Teile Bestandteil (B), 1 bis 15 Gew.-Teile Bestandteil (C) und 1 bis 20 Gew.-Teile Bestandteil (D) umfaßt, und Steuerung der Temperatur während des Knetens darauf, dass die Maximaltemperatur 200°C oder weniger beträgt, wobei
Bestandteil (A) ein lösungspolymerisierter Dienkautschuk ist,
Bestandteil (B) Siliciumdioxid ist,
Bestandteil (C) ein Silankupplungsmittel ist, das mindestens eine Verbindung der Formel (1) oder Formel (2) ist:
[(OR)₃SiCₐH₂ₐ]₂S_{b} (1)
(OR)₃SiCₐH₂ₐZ (2)
wobei R eine Methylgruppe oder eine Ethylgruppe darstellt, a eine ganze Zahlvon 1 bis 8 darstellt, b eine ganze Zahl von 1 bis 6 darstellt und Z eine Mercapto-, Epoxy-, Vinyl- oder Aminogruppe darstellt, die gegebenenfalls mit einer oder zwei Methyl- oder Ethylgruppen substituiert ist, und
Bestandteil (D) eine organische Siliciumverbindung der Formel (3) ist: 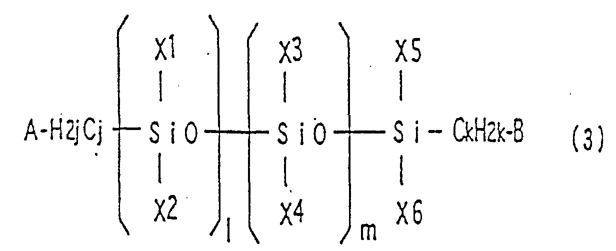 in der A und B unabhängig ein Wasserstoffatom, eine Hydroxylgruppe oder eine Vinylgruppe darstellen, 1 und m unabhängig eine ganze Zahl von 1 bis 100 darstellen, j und k unabhängig eine ganze Zahl von 0 bis 50 darstellen und X₁ bis X₆ unabhängig eine Phenylgruppe, eine Vinylgruppe oder einen Rest der folgenden Formel (4) darstellen:
-CₙH₂ₙY (4)
wobei Y ein Wasserstoffatom oder eine Hydroxylgruppe darstellt und n eine ganze Zahl von 0 bis 50 darstellt, mit einem Zahlenmittel des Molekulargewichts von etwa 100 bis 10000.

2. Kautschukmasse nach Anspruch 1, in der Bestandteil (A) ein Butadienkautschuk oder ein Styrol-Butadien-Kautschuk ist.

3. Kautschukmasse nach Anspruch 1 oder 2, in der Bestandteil (D) eine oder mehrere Hydroxylgruppen enthält.

4. Kautschukmasse nach einem der vorstehenden Ansprüche, wobei die Maximaltemperatur während des Knetens 100 bis 160°C beträgt.

5. Verfahren zur Herstellung einer Kautschukmasse, umfassend Kneten eines Gemisches, das 100 Gew.-Teile Bestandteil (A), 5 bis 100 Gew.-Teile Bestandteil (B), 1 bis 15 Gew.-Teile Bestandteil (C) und 1 bis 20 Gew.-Teile Bestandteil (D) umfaßt, und Steuerung der Temperatur während des Knetens darauf, dass die Maximaltemperatur 200°C oder weniger beträgt, wobei die Bestandteile (A), (B), (C) und (D) wie in Anspruch 1 definiert sind.

6. Verfahren nach Anspruch 5, wobei die Maximaltemperatur während des Knetens 100 bis 160°C beträgt.

7. Masse nach einem der Ansprüche 1 bis 4 in geformter Form.

8. Reifen, umfassend eine Masse nach einem der Ansprüche 1 bis 4.

## Revendications

1. Composition de caoutchouc pouvant être obtenue par malaxage d'un mélange comprenant 100 parties en poids de composant (A), de 5 à 100 parties en poids de composant (B), de 1 à 15 parties en poids de composant (C) et de 1 à 20 parties en poids de composant (D), et contrôle de la température durant le malaxage de façon que la température maximale soit de 200°C ou moins, dans laquelle
le composant (A) est un caoutchouc diénique polymérisé en solution,
le composant (B) est la silice,
le composant (C) est un agent de couplage de type silane qui est au moins un composé de formule (1) ou de formule (2) :
[(OR)₃SiCₐH₂ₐ]₂S_{b} (1)
(OR)₃SiCₐH₂ₐZ (2)
où R représente un groupe méthyle ou un groupe éthyle, a représente un entier de 1 à 8, b représente un entier de 1 à 6 et Z représente un groupe mercapto, un groupe époxy, un groupe vinyle ou un groupe amino qui est éventuellement substitué par un ou deux groupes méthyle ou éthyle, et
le composant (D) est un composé organique du silicium de formule (3) : 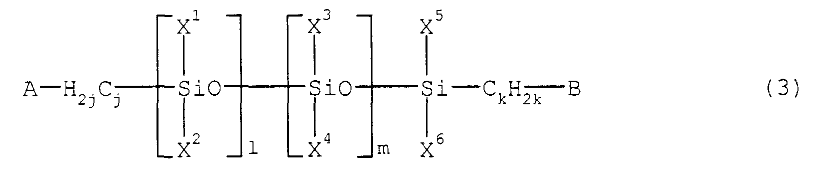 dans laquelle A et B représentent indépendamment un atome d'hydrogène, un groupe hydroxyle ou un groupe vinyle, l et m représentent indépendamment un entier de 1 à 100, j et k représentent indépendamment un entier de 0 à 50 et X₁ à X₆ représentent indépendamment un groupe phényle, un groupe vinyle ou un groupe représenté par la formule (4) suivante :
-CₙH₂ₙY (4)
dans laquelle Y représente un atome d'hydrogène ou un groupe hydroxyle et n représente un entier de 0 à 50,
ayant une masse moléculaire moyenne en nombre d'environ 100 à 10 000.

2. Composition de caoutchouc selon la revendication 1, dans laquelle le composant (A) est un caoutchouc de butadiène ou un caoutchouc de styrène/butadiène.

3. Composition de caoutchouc selon la revendication 1 ou 2, dans laquelle le composant (D) contient un ou plusieurs groupes hydroxyle.

4. Composition de caoutchouc selon l'une quelconque des revendications précédentes, dans laquelle la température maximale durant le malaxage est de 100 à 160°C.

5. Procédé pour produire une composition de caoutchouc, qui comprend le malaxage d'un mélange comprenant 100 parties en poids de composant (A), de 5 à 100 parties en poids de composant (B), de 1 à 15 parties en poids de composant (C) et de 1 à 20 parties en poids de composant (D), et le contrôle de la température durant le malaxage de façon que la température maximale soit de 200C ou moins, où les composants (A), (B), (C) et (D) sont tels que définis dans la revendication 1.

6. Procédé selon la revendication 5, dans lequel la température maximale durant le malaxage est de 100 à 160°C.

7. Composition selon l'une quelconque des revendications 1 à 4, qui a une forme façonnée.

8. Pneumatique comprenant une composition selon l'une quelconque des revendications 1 à 4.
